# EUROPEAN PATENT SPECIFICATION

(11) **EP 3 869 377 B1**
(45) Date of publication and mention of the grant of the patent: **10.05.2023**
(21) Application number: 21157274.8
(22) Date of filing: 16.02.2021
(51) Int. Cl.: G06F 21/64

(54) **METHOD AND APPARATUS FOR DATA PROCESSING BASED ON SMART CONTRACT, DEVICE AND STORAGE MEDIUM**
VERFAHREN UND VORRICHTUNG ZUR DATENVERARBEITUNG AUF BASIS VON SMART CONTRACT, VORRICHTUNG UND SPEICHERMEDIUM
PROCÉDÉ ET APPAREIL DE TRAITEMENT DE DONNÉES BASÉ SUR UN CONTRAT INTELLIGENT, DISPOSITIF ET SUPPORT D'INFORMATIONS

(30) Priority: 20.02.2020 CN 202010104354
(43) Date of publication of application: 25.08.2021
(73) Proprietor: BAIDU ONLINE NETWORK TECHNOLOGY (BEIJING) CO., LTD., Beijing 100085 (CN)
(72) Inventor: SUN, Junyi, Beijing, 100085 (CN); WANG, Yucao, Beijing, 100085 (CN); XIAO, Wei, Beijing, 100085 (CN)
(74) Representative: Maiwald GmbH

(56) References cited:
- CN-A- 110 046 523
- NGUYEN THANH SON LAM ET AL: "Impact of network delays on Hyperledger Fabric", IEEE INFOCOM 2019 - IEEE CONFERENCE ON COMPUTER COMMUNICATIONS WORKSHOPS (INFOCOM WKSHPS), IEEE, 29 April 2019 (2019-04-29), pages 222-227, XP033619446, DOI: 10.1109/INFCOMW.2019.8845168 [retrieved on 2019-09-19]
- ZHANG YUAN ET AL: "Chronos: Secure and Accurate Time-Stamping Scheme for Digital Files via Blockchain", ICC 2019 - 2019 IEEE INTERNATIONAL CONFERENCE ON COMMUNICATIONS (ICC), IEEE, 20 May 2019 (2019-05-20), pages 1-6, XP033582561, DOI: 10.1109/ICC.2019.8762071 [retrieved on 2019-07-12]
- SHAYAN ESKANDARI ET AL: "On the Feasibility of Decentralized Derivatives Markets", ARXIV.ORG, CORNELL UNIVERSITY LIBRARY, 201 OLIN LIBRARY CORNELL UNIVERSITY ITHACA, NY 14853, 14 February 2018 (2018-02-14), XP081221771, DOI: 10.1007/978-3-319-70278-0_35

## Description

### TECHNICAL FIELD

The present disclosure relates to a field of computer technologies, especially a field of block-chain technologies, and more particular to, a method of data processing based on smart contract, an apparatus for data processing based on smart contract, an electronic device and a storage medium.

### BACKGROUND

Block-chain is a new application mode of computer technologies such as distributed data storage, point-to-point transmission, consensus mechanism, and encryption algorithm. In the field of block-chain technologies, smart contracts refer to computer programs that cannot be falsified and are automatically executed.

In some block-chain networks, such as Fabric and XuperChain, the smart contracts are executed based on a pre-execution mechanism, that is, before the transaction processing request is packaged into the block, the transaction processing request is pre-executed through an endorsement node, and then a node other than the endorsement node in the block-chain network process the transaction processing request according to a pre-executing result of the endorsement node.

In the pre-execution mechanism, due to inconsistence of clocks at different nodes and existence of network delays and other reasons, smart-contract developers are provided with an ability to obtain time, that is, time-dependent smart contracts could not be implemented.

CN110046523A discloses a smart contract verification method.

Document "Impact of network delays on Hyperledger Fabric" focuses Hyperledger Fabric, the first blockchain in the market tailored for a private environment, allowing businesses to create a permissioned network. Hyperledger Fabric implements a PBFT consensus in order to maintain a non forking blockchain at the application level.

Document "Chronos: Secure and Accurate Time-Stamping Scheme for Digital Files via Blockchain" proposes an accurate blockchain-based time-stamping scheme called Chronos.

### SUMMARY

Embodiments of the present disclosure provide a method of data processing based on smart contract, an apparatus for data processing based on smart contract, an electronic device and a storage medium, capable of realizing time-dependent smart contracts in the pre-execution mechanism.

In a first aspect, embodiments of the present disclosure provide a method of data processing based on smart contract. The method includes: determining a current endorsement time based on a generating time point of the previous block in an endorsement blockchain during calling a time-dependent contract; and preprocessing a current transaction processing request based on the current endorsement time to obtain an endorsement processing result, to enable a node other than the endorsement node in the blockchain network to process the current transaction processing request based on the endorsement processing result. In addition, determining the current endorsement time based on the generating time point of the previous block in the endorsement blockchain includes determining a generating time point of a current block in the endorsement blockchain based on the generating time point of the previous block in the endorsement blockchain and a block generating time interval; and determining the generating time point of the current block in the endorsement blockchain as the current endorsement time.

This embodiment has the following advantages or beneficial effects. The current endorsement time is determined based on the generating time point of the previous block in the endorsement blockchain during calling the smart contract, and the current transaction processing request is processed based on the current endorsement time. As long as different nodes in the blockchain network are updated to the longest blockchain, current time determined during the execution of the smart contract at different nodes is the same, so that processing results of the smart contract at different nodes are consistent, that is, the pre-execution mechanism supports time-dependent smart contracts. Further, the generating time point of the current block in the blockchain is determined based on the generating time point of the previous block in the endorsement blockchain and the block generating time interval, that is, the generating time point of the current block is determined before the current block is generated in the pre-execution mechanism, and the current transaction processing request is processed based on the generating time point of the current block, and error of the current endorsement time is controlled within a single block generating time interval, which improves processing accuracy of smart contracts.

Optionally, an operation of determining the current endorsement time is triggered when the smart contract implements a current time acquisition function.

Optionally, the method further includes: during calling the smart contract, determining a height of a previous block in the endorsement blockchain, to enable the node other than the endorsement node to validate the endorsement processing result based on the height of the previous block in the endorsement blockchain.

This embodiment has the following advantages or beneficial effects. The height of the previous block in the endorsement blockchain is determined by the endorsement node during calling the smart contract, so that the node other than the endorsement node may determine whether the height of the previous block in the endorsement blockchain and a height of the previous block in the blockchain in the node other than the endorsement node are the same by comparing the heights of the previous blocks. When inconsistent, an operation ends. Therefore, transaction processing efficiency of the node other than the endorsement node may be improved.

In a second aspect, embodiments of the present disclosure provide a method of data processing based on smart contract. The method includes: receiving a current transaction processing request and an endorsement processing result, in which the endorsement processing result is obtained by preprocessing the current transaction processing request through calling a time-dependent smart contract by the endorsement node; calling the smart contract and determining a local current time based on a generating time point of a previous block in a local blockchain; processing the current transaction processing request based on the local current time to obtain a local processing result; and determining whether the endorsement processing result is consistent with the local processing result to obtain a validation result, and generating a final processing result based on the validation result, wherein the determining the local current time based on the generating time point of the previous block in the local blockchain comprises determining a generating time point of a current block in the local blockchain based on the generating time point of the previous block in the local blockchain and a block generating time interval; and determining the generating time point of the current block in the local blockchain as the local current time.

In a third aspect, embodiments of the present disclosure provide an apparatus for data processing based on smart contract. The apparatus includes: an endorsement time determining module and a request preprocessing module. The endorsement time determining module is configured to determine a current endorsement time based on a generating time point of a previous block in an endorsement blockchain during calling a time-dependent contract. The request preprocessing module is configured to preprocess a current transaction processing request based on the current endorsement time to obtain an endorsement processing result, to enable a node other than the endorsement node in the block-chain network to process the current transaction processing request based on the endorsement processing result, wherein the endorsement time determining module is configured to determine a generating time point of the current block in the endorsement blockchain based on the generating time point of the previous block in the endorsement blockchain and a block generating time interval; and determine the generating time point of the current block in the endorsement blockchain as the current endorsement time.

In a fourth aspect, embodiments of the present disclosure provide an apparatus for data processing based on smart contract. The apparatus includes: a receiving module, a local time module, a request processing module and a request validation module. The receiving module is configured to receive a current transaction processing request and an endorsement processing result, in which the endorsement processing result is obtained by preprocessing the current transaction processing request through calling a time-dependent smart contract by the endorsement node. The local time module is configured to call the smart contract and determine a local current time based on a generating time point of a previous block in a local blockchain. The request processing module is configured to process the current transaction processing request based on the local current time to obtain a local processing result. The request validation module is configured to determine whether the endorsement processing result is consistent with the local processing result to obtain a validation result, and generate a final processing result based on the validation result, wherein the local time module is configured to determine a generating time point of a current block in the local blockchain based on the generating time point of the previous block in the local blockchain and a block generating time interval; and determine the generating time point of the current block in the local blockchain as the local current time..

In a fifth aspect, embodiments of the present disclosure provide an electronic device. The electronic device includes: at least one processor, and a memory communicatively connected to the at least one processor. The memory stores instructions executable by the at least one processor, and when the instructions are executed by the at least one processor, the at least one processor is caused to implement the method according to any embodiment of the present disclosure.

In a sixth aspect, embodiments of the present disclosure provide a computer-readable storage medium storing computer instructions. When the instructions are executed, the at least one processor is caused to implement the method according to any embodiment of the present disclosure.

In a seventh aspect, embodiments of the present disclosure provide a computer program product comprising computer programs. When the computer programs are executed, the computer programs are caused to implement the method according to any embodiment of the present disclosure.

Additional effects of the above-mentioned optional manners will be described below in combination with specific embodiments.

### BRIEF DESCRIPTION OF THE DRAWINGS

The drawings are used to better understand the solution and do not constitute a limitation to the disclosure, in which:
FIG. 1 is a flowchart of a method of data processing based on smart contract according to Embodiment 1 of the present disclosure.
FIG. 2 is a flowchart of a method of data processing based on smart contract according to Embodiment 2 of the present disclosure.
FIG. 3 is a flowchart of a method of data processing based on smart contract according to Embodiment 3 of the present disclosure.
FIG. 4 is a diagram of an apparatus for data processing based on smart contract according to Embodiment 4 of the present disclosure.
FIG. 5 is a diagram of an apparatus for data processing based on smart contract according to Embodiment 5 of the present disclosure.
FIG. 6 is a block diagram of an electronic device used to implement the method of data processing based on smart contract according to an embodiment of the present disclosure.

### DETAILED DESCRIPTION

The following describes the exemplary embodiments of the present disclosure with reference to the accompanying drawings, which includes various details of the embodiments of the present disclosure to facilitate understanding, which shall be considered merely exemplary. Therefore, those of ordinary skill in the art should recognize that various changes and modifications can be made to the embodiments described herein without departing from the scope of the invention which is defined by the appended claims.

Similarly, for clarity and conciseness, descriptions of well-known functions and structures are omitted in the following description.

### Embodiment 1

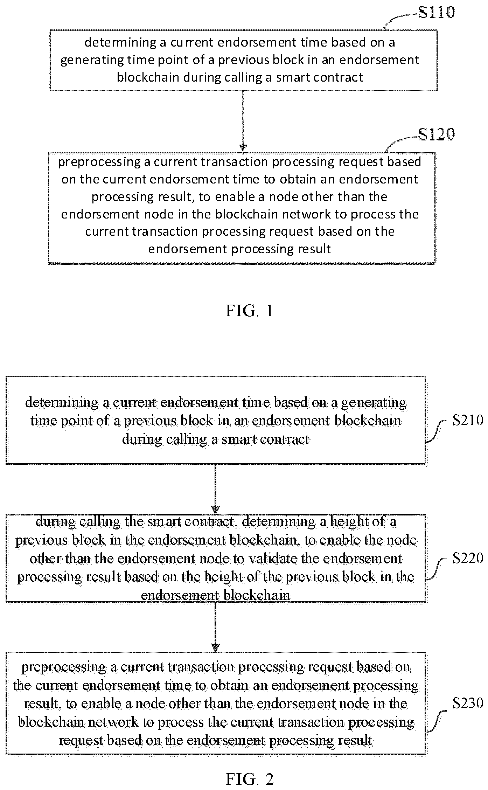

FIG. 1 is a flowchart of a method of data processing based on smart contract according to Embodiment 1 of the present disclosure. This embodiment is applicable to situations of calling a time-dependent smart contract in a pre-execution mechanism to process a transaction request, the method is executed by an apparatus for data processing based on smart contract configured in an endorsement node in a blockchain network. The apparatus is implemented in software and/or hardware. As illustrated in FIG. 1, the method includes the following.

At block S 110, a current endorsement time is determined based on a generating time point of a previous block in an endorsement blockchain during calling a smart contract.

The blockchain network may determine at least one endorsement node based on the pre-execution mechanism. For example, in XuperChain, one endorsement node is determined in a single block generating period, and a transaction processing request of a user node is sent to the endorsement node for pre-execution, and the endorsement node returns a pre-execution result to the user node. The user node sends the pre-execution result and the transaction processing request to the blockchain network for processing. Fabric blockchain determines at least two endorsement nodes in a single block generating period, and each transaction processing request requires at least two endorsement nodes for preprocessing. The embodiments of the present disclosure do not specifically limit methods of determining the endorsement node.

In the embodiment, the endorsement blockchain refers to a blockchain in an endorsement node, the smart contract refers to a time-dependent smart contract, and the current endorsement time refers to a current time determined by the endorsement node.

In detail, during calling the smart contract by the endorsement node, to preprocess the current transaction processing request obtained from the user node, the current endorsement time is determined according to the generating time point of the previous block in the endorsement blockchain. For example, the generating time point of the previous block is determined as the current endorsement time, or the current endorsement time is obtained after performing preprocessing on the generating time point of the previous block. Since the current endorsement time is determined by the generating time point of the previous block in the endorsement blockchain, not related to clocks of different node, and the endorsement node itself stores the endorsement blockchain, the current endorsement time is determined without communication operations. Based on the longest chain principle of the blockchain network, a current time determined by the node and updated to the longest chain in the blockchain network is identical to the current endorsement time, that is, the current time of the blockchain network is obtained. When a current time determined by a certain node is different from the current time of the blockchain network, the blockchain in the certain node is not the longest blockchain, and data processed by the certain node is discardable. The certain node may be an endorsement node, a block generating node, or a validation node.

At block S 120, a current transaction processing request is preprocessed based on the current endorsement time to obtain an endorsement processing result, to enable a node other than the endorsement node in the blockchain network to process the current transaction processing request based on the endorsement processing result.

In the embodiment, the smart contract preprocesses a current transaction processing data set according to the current endorsement time to obtain a reading and writing set of the smart contract as the endorsement processing result. The reading set in the reading and writing set of the smart contract is used to record data desired to be read in the process of executing the smart contract, and the writing set is used to record execution results of the smart contract. The endorsement processing result is the reading and writing set or writing set of the smart contract in the endorsement node.

The node other than the endorsement node may be a block generating node and/or a validation node. When the node other than the endorsement node is the block generating node, the block generating node itself may call the smart contract to process the current transaction processing request to obtain the processing result, and validates whether the obtained processing result is consistent with the endorsement processing result. When the processing result is consistent with the endorsement processing result, the current block is generated, otherwise, the operation is stopped. When the node other than the endorsement node is the validation node, the validation node is use to determine that current block passes the validation, that is, determine that the current block is written into the blockchain. It may be noted that when the block generating node or the block validation node is the endorsement node itself, a final processing result is obtained directly according to the endorsement processing result without repeat processing.

In the technical solution of this embodiment, nodes in the blockchain network are based on the pre-execution mechanism. In the process of calling the smart contract, the current time is determined based on the generating time point of the previous block in the blockchain, such that current times of the nodes in the blockchain network are consistent, that is, executions of the smart contract are consistent. That is, in the pre-execution mechanism, time-dependent smart contracts are supported, and the smart contracts may provide developers with the ability to obtain time. The embodiments of the present disclosure are applicable to all pre-execution mechanisms.

### Embodiment 2

FIG. 2 is a flowchart of a method of data processing based on smart contract according to Embodiment 2 of the present disclosure. This embodiment is based on Embodiment 1 and is further described based on the smart contract of the pre-execution mechanism. As illustrated in FIG. 2, the method includes the following.

At block S210, a current endorsement time is determined based on a generating time point of a previous block in an endorsement blockchain during calling a smart contract.

In an embodiment, determining the current endorsement time based on the generating time point of the previous block in the endorsement blockchain includes: determining a generating time point of a current block in the endorsement blockchain based on the generating time point of the previous block in the endorsement blockchain and a block generating time interval; and determining the generating time point of the current block in the endorsement blockchain as the current endorsement time.

The block generating time interval, which is a known fixed value, refers to an interval between generating time points of two adjacent blocks in the blockchain network. The generating time point of the current block is determined before the current block is generated based on the generating time point of the previous block and the block generating time interval. The generating time point of the current block is determined as the current endorsement time, which not only ensures that the current endorsement time has definiteness to achieve consensus, but also controls the error of the current endorsement time within the block generating time interval, thereby improving accuracy of the transaction processing of the smart contract.

Alternatively, an operation of determining the current endorsement time is triggered when the smart contract implements a current time acquisition function.

In the embodiment, the smart contract depends on time, and the current time acquisition function now () is called. For example, the smart contract may perform asset staking based on the current time. The specific logic of the smart contract is not limited in the embodiments of this disclosure.

At block S220, a height of a previous block in the endorsement blockchain is determined, to enable the node other than the endorsement node to validate the endorsement processing result based on the height of the previous block in the endorsement blockchain.

In this embodiment, during calling the smart contract by the endorsement node, to preprocess the current transaction processing request, the height of the previous block in the endorsement blockchain is also determined. Based on the longest chain principle of the blockchain network, heights of the previous blocks determined by the nodes updated to the longest chain in the blockchain network are the same. The node other than the endorsement node may validate whether a height of the previous block in its own blockchain and the height of the previous block in the endorsement blockchain are the same, before validating the endorsement processing result. When the height of the previous block in its own blockchain and the height of the previous block in the endorsement blockchain are the same, validation of the endorsement processing result is continued, otherwise, it means that the endorsement blockchain and/or its own blockchain is not the longest blockchain, and the validation is stopped, indicating that the validation fails.

By pre-determining whether the blockchain at different nodes is updated to the longest chain based on the height of the previous block, thereby improving efficiency of validating the endorsement processing result of the node other than the endorsement node.

At block S230, a current transaction processing request is preprocessed based on the current endorsement time to obtain an endorsement processing result, to enable a node other than the endorsement node in the blockchain network to process the current transaction processing request based on the endorsement processing result.

In the technical solution of this embodiment, in the process of pre-executing the smart contract by the endorsement node, the current endorsement time is determined based on the generating time point of the previous block in the endorsement blockchain, and the height of the previous block in the endorsement blockchain is determined. The smart contract processes the current transaction processing request according to the current endorsement data to obtain the endorsement processing result. The node other than the endorsement node in the blockchain network determines whether blockchains in the endorsement node and the node other than the endorsement node are synchronized according to the height of the previous block in the endorsement blockchain. When the endorsement node and the node other than the endorsement node are synchronized, the validation of the endorsement processing result is continued, otherwise, the validation is directly ended. The pre-execution mechanism not only can realize time-dependent smart contracts, but also can improve the efficiency of validation by other nodes on the endorsement processing results.

### Embodiment 3

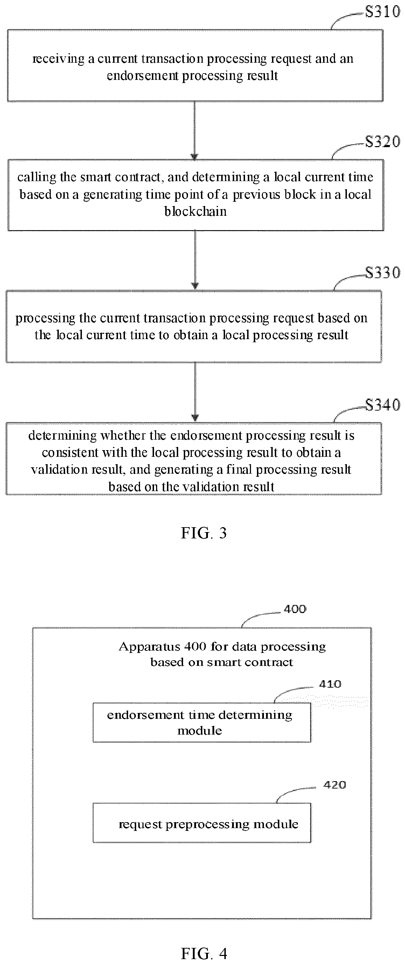

FIG. 3 is a flowchart of a method of data processing based on smart contract according to Embodiment 3 of the present disclosure. This embodiment is applicable to situations where a time-dependent smart contract is called based on a pre-execution mechanism to process transaction requests. The method is executed by an apparatus for data processing based on smart contract configured in a node other than an endorsement node in the blockchain network. The apparatus is implemented in software and/or hardware. As illustrated in FIG. 3, the method includes the following.

At block S310, a current transaction processing request and an endorsement processing result are received.

In an embodiment, the endorsement processing result is obtained by preprocessing the current transaction processing request through calling the smart contract by the endorsement node.

In detail, the user node sends the current transaction processing request to the endorsement node, and the endorsement node calls the smart contract to process the current transaction processing request to obtain the endorsement processing result, and return the endorsement processing result to the user node. The user node uses its own private key to sign the endorsement processing result and the current transaction processing request, and sends signature data to the node other than the endorsement node in the blockchain network. The node other than the endorsement node uses a public key of the user node to validate the signature data to obtain the current transaction processing request and the endorsement processing result. Alternatively, the node other than the endorsement node may be a block generating nodes and/or a block validation node in the blockchain network.

At block S320, the smart contract is called and a local current time is determined based on a generating time point of a previous block in a local blockchain.

The local blockchain refers to the blockchain in the node other than the endorsement node, and the local current time refers to the current time determined by the node other than the endorsement node. The local current time is determined by the generating time point of the previous block in the local blockchain, not related to clocks of the nodes, and may be determined without network communication.

Alternatively, determining the local current time based on the generating time point of the previous block in the local blockchain includes: determining a generating time point of a current block in the local blockchain based on the generating time point of the previous block in the local blockchain and a block generating time interval; and determining the generating time point of the current block in the local blockchain as the local current time.

Alternatively, an operation of determining the current endorsement time is triggered when the smart contract implements a current time acquisition function.

At block S330, the current transaction processing request is processed based on the local current time to obtain a local processing result.

At block S340, whether the endorsement processing result is consistent with the local processing result is determined to obtain a validation result, and a final processing result is generated based on the validation result.

In the embodiment of the present disclosure, when the endorsement processing result is consistent with the local processing result, the smart contract processing is confirmed, that is, and the endorsement node and the node other than the endorsement node reach a consensus on the processing result; when the endorsement processing result is inconsistent with the local processing result, the consensus fails to reach, and following operations are stopped.

Alternatively, a current block is generated as the final processing result, when the node other than the endorsement node is a block generating node, and the endorsement processing result is consistent with the local processing result. The final processing result that the current block passes the validation is determined, when the node other than the endorsement node is a block validation node, and the endorsement processing result is consistent with the local processing result.

In the technical solution of this embodiment, in the process of executing the smart contract by the nodes in the blockchain network, each node determines its current time according to the generating time point of the previous block in its own blockchain, and processes its own current transaction processing request according to its own current time to obtain its own processing result. When the processing results of different nodes are consistent, the blockchain network reaches a consensus, otherwise the consensus fails to reach. The pre-execution mechanism, not only may realize time-dependent smart contracts, but also may improve efficiency of validation by the node other than the endorsement node on the endorsement processing results.

Alternatively, before S320, the method further includes: receiving a height of a previous block in an endorsement blockchain; determining a height of a previous block in the local blockchain; and stopping operations, when the height of the previous block in the endorsement blockchain is inconsistent with the height of the previous block in the local blockchain.

In detail, when the height of the previous block in the endorsement blockchain is inconsistent with the height of the previous block in the local blockchain, the endorsement blockchain and/or the local blockchain is not the longest blockchain, operations are ended, validation is failed, and executing the smart contracts to validate the endorsement processing result is not required.

### Embodiment 4

FIG. 4 is a diagram of an apparatus 400 for data processing based on smart contract according to Embodiment 4 of the present disclosure. This embodiment is applicable to situations where a time-dependent smart contract is called based on a pre-execution mechanism, and transaction requests are processed. The apparatus implements the method of data processing based on smart contract executed by the endorsement node in any embodiment of this disclosure. The apparatus 400 specifically includes the following modules.

An endorsement time determining module 410 is configured to determine a current endorsement time based on a generating time point of a previous block in an endorsement blockchain during calling a smart contract.

A request preprocessing module 420 is configured to preprocess a current transaction processing request based on the current endorsement time to obtain an endorsement processing result, to enable a node other than the endorsement node in the block-chain network to process the current transaction processing request based on the endorsement processing result.

Moreover, the endorsement time determining module 410 is further configured to: determine a generating time point of a current block in the endorsement blockchain based on the generating time point of the previous block in the endorsement blockchain and a block generating time interval; and determine the generating time point of the current block in the endorsement blockchain as the current endorsement time.

An operation of determining the current endorsement time is triggered when the smart contract implements a current time acquisition function.

Furthermore, the apparatus further includes: a first result validation module, configured to determine a height of a previous block in the endorsement blockchain during calling the smart contract, to enable the node other than the endorsement node to validate the endorsement processing result based on the height of the previous block in the endorsement blockchain.

In the technical solution of this embodiment, in the process of pre-executing the smart contract by the endorsement node, the current endorsement time is determined according to the generating time point of the previous block in the endorsement blockchain, and the height of the previous block in the endorsement blockchain is determined, and the smart contract processes the current transaction processing request according to the current endorsement data to obtain the endorsement processing result. The node other than the endorsement node in the blockchain network determines whether the blockchain of the endorsement node and the node other than the endorsement node are synchronized according to the height of the previous block in the endorsement blockchain. If the blockchains of and the endorsement node and the node other than the endorsement node are synchronized, validation of the endorsement processing result is continued, if not synchronized, the operation is directly ended. The pre-execution mechanism not only implement time-dependent smart contracts, but also improve the efficiency of validation of the node other than the endorsement node on endorsement processing results.

### Embodiment 5

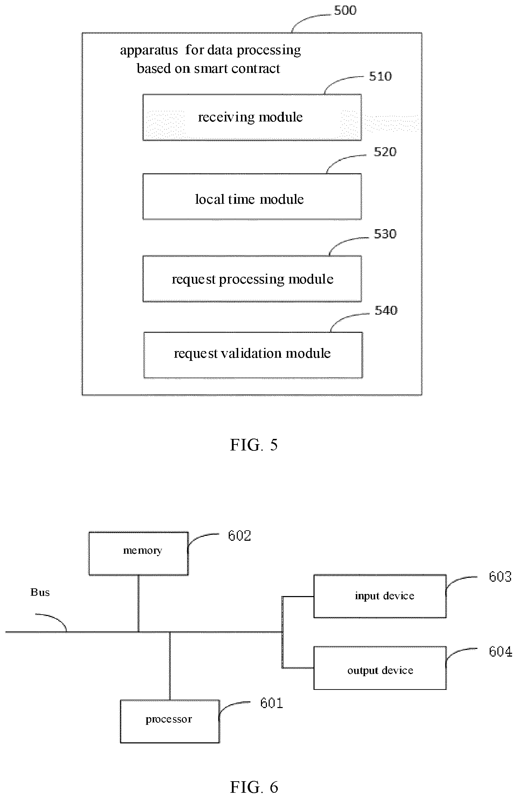

FIG. 5 is a diagram of an apparatus 500 for data processing based on smart contract according to Embodiment 5 of the present disclosure. This embodiment is applicable to situations where a time-dependent smart contract is called based on a pre-execution mechanism, and transaction requests are processed. The apparatus implements the method of data processing based on smart contract executed by a node other than an endorsement node in any embodiment of this disclosure. The apparatus 500 specifically includes the following modules.

A receiving module 510 is configured to receive a current transaction processing request and an endorsement processing result, in which the endorsement processing result is obtained by preprocessing the current transaction processing request through calling the smart contract by the endorsement node.

A local time module 520 is configured to call the smart contract and determine a local current time based on a generating time point of a previous block in a local blockchain.

A request processing module 530 is configured to process the current transaction processing request based on the local current time to obtain a local processing result.

A second result validation module 540 is configured to determine whether the endorsement processing result is consistent with the local processing result to obtain a validation result, and generate a final processing result based on the validation result.

The local time module 520 is configured to: determine a generating time point of the current block in the endorsement blockchain based on the generating time point of the previous block in the endorsement blockchain and a block generating time interval; and determine the generating time point of the current block in the endorsement blockchain as the current endorsement time.

Moreover, the apparatus 500 further includes a second result validation module, configured to: receive a height of a previous block in an endorsement blockchain; determine a height of a previous block in the local blockchain; and stop operations, when the height of the previous block in the endorsement blockchain is inconsistent with the height of the previous block in the local blockchain.

The second result validation module 540 is configured to: generate a current block as the final processing result, when the node other than the endorsement node is a block generating node, and the endorsement processing result is consistent with the local processing result; and determine the final processing result that the current block passes the validation, when the node other than the endorsement node is a block validation node, and the endorsement processing result is consistent with the local processing result.

In the technical solution of this embodiment, in the execution of the smart contract by the node in the blockchain network, the current time is determined according to the generating time point of the previous block in the blockchain, and the current transaction processing request is processed according to the current time to obtain a result. If processing results of different nodes are consistent, the blockchain network reaches a consensus, otherwise no consensus is reached. In the pre-execution mechanism, not only time-dependent smart contracts are realized, but also efficiency of validation of the node other than the endorsement node on endorsement processing results is improved.

### Embodiment 6

According to the embodiments of the present disclosure, the disclosure also provides an electronic device, a readable storage medium and a computer program product.

FIG. 6 is a block diagram of a smart screen device used to implement the method for obtaining online picture-book content according to an embodiment of the disclosure. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown here, their connections and relations, and their functions are merely examples, and are not intended to limit the implementation of the disclosure described and/or required herein.

As illustrated in FIG. 6, the electronic device includes: one or more processors 601, a memory 602, and interfaces for connecting various components, including a high-speed interface and a low-speed interface. The various components are interconnected using different buses and can be mounted on a common mainboard or otherwise installed as required. The processor may process instructions executed within the electronic device, including instructions stored in or on the memory to display graphical information of the GUI on an external input/output device such as a display device coupled to the interface. In other embodiments, a plurality of processors and/or buses can be used with a plurality of memories and processors, if desired. Similarly, a plurality of electronic devices can be connected, each providing some of the necessary operations (for example, as a server array, a group of blade servers, or a multiprocessor system). A processor 601 is taken as an example in FIG. 6.

The memory 602 is a non-transitory computer-readable storage medium according to the disclosure. The memory stores instructions executable by at least one processor, so that the at least one processor executes the method according to the disclosure. The non-transitory computer-readable storage medium of the disclosure stores computer instructions, which are used to cause a computer to execute the method according to the disclosure.

As a non-transitory computer-readable storage medium, the memory 602 is configured to store non-transitory software programs, non-transitory computer executable programs and modules, such as program instructions/modules (for example, the endorsement time determining module 410 and the request preprocessing module 420 shown in FIG. 4, the receiving module 510, the local time module 520, the request processing module 530, and the result validation module 540 shown in FIG. 5) corresponding to the method in the embodiment of the present disclosure. The processor 601 executes various functional applications and data processing of the server by running non-transitory software programs, instructions, and modules stored in the memory 602, that is, implementing the method in the foregoing method embodiments.

The memory 602 may include a storage program area and a storage data area, where the storage program area may store an operating system and application programs required for at least one function. The storage data area may store data created according to the use of the electronic device for implementing the method. In addition, the memory 602 may include a high-speed random access memory, and a non-transitory memory, such as at least one magnetic disk storage device, a flash memory device, or other non-transitory solid-state storage device. In some embodiments, the memory 602 may optionally include a memory remotely disposed with respect to the processor 601, and these remote memories may be connected to the electronic device for implementing the method through a network. Examples of the above network include, but are not limited to, the Internet, an intranet, a local area network, a mobile communication network, and combinations thereof.

The electronic device for implementing the method may further include: an input device 603 and an output device 604. The processor 601, the memory 602, the input device 603, and the output device 604 may be connected through a bus or in other manners. In FIG. 6, the connection through the bus is taken as an example.

The input device 603 may receive inputted numeric or character information, and generate key signal inputs related to user settings and function control of an electronic device for implementing the method, such as a touch screen, a keypad, a mouse, a trackpad, a touchpad, an indication rod, one or more mouse buttons, trackballs, joysticks and other input devices. The output device 604 may include a display device, an auxiliary lighting device (for example, an LED), a haptic feedback device (for example, a vibration motor), and the like. The display device may include, but is not limited to, a liquid crystal display (LCD), a light emitting diode (LED) display, and a plasma display. In some embodiments, the display device may be a touch screen.

The computer program product includes computer programs. When the computer programs are executed, the computer programs are caused to implement the method according to any embodiment of the present disclosure.

Various embodiments of the systems and technologies described herein may be implemented in digital electronic circuit systems, integrated circuit systems, application specific integrated circuits (ASICs), computer hardware, firmware, software, and/or combinations thereof. These various embodiments may be implemented in one or more computer programs, which may be executed and/or interpreted on a programmable system including at least one programmable processor. The programmable processor may be dedicated or general purpose programmable processor that receives data and instructions from a storage system, at least one input device, and at least one output device, and transmits the data and instructions to the storage system, the at least one input device, and the at least one output device.

These computing programs (also known as programs, software, software applications, or code) include machine instructions of a programmable processor and may utilize high-level processes and/or object-oriented programming languages, and/or assembly/machine languages to implement these calculation procedures. As used herein, the terms "machine-readable medium" and "computer-readable medium" refer to any computer program product, device, and/or device used to provide machine instructions and/or data to a programmable processor (for example, magnetic disks, optical disks, memories, programmable logic devices (PLDs), including machine-readable media that receive machine instructions as machine-readable signals. The term "machine-readable signal" refers to any signal used to provide machine instructions and/or data to a programmable processor.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, sound input, or tactile input).

The systems and technologies described herein can be implemented in a computing system that includes background components (for example, a data server), or a computing system that includes middleware components (for example, an application server), or a computing system that includes front-end components (For example, a user computer with a graphical user interface or a web browser, through which the user can interact with the implementation of the systems and technologies described herein), or include such background components, intermediate computing components, or any combination of front-end components. The components of the system may be interconnected by any form or medium of digital data communication (e.g., a communication network). Examples of communication networks include: local area network (LAN), wide area network (WAN), the Internet and blockchain network.

The computer system may include a client and a server. The client and server are generally remote from each other and interacting through a communication network. The client-server relation is generated by computer programs running on the respective computers and having a client-server relation with each other.

In the technical solution of the embodiments of the present disclosure, in the process of pre-executing the smart contract by the endorsement node, the current endorsement time is determined according to the generating time point of previous block in the endorsement blockchain, and the height of the previous block in the endorsement blockchain is determined, the smart contract processes the current transaction processing request according to the current endorsement data to obtain the endorsement processing result. The node other than the endorsement node in the blockchain network determine whether the blockchains of the endorsement node and the node other than the endorsement node are synchronized according to the height of the previous block in the endorsement blockchain. If the blockchains of the endorsement node and the node other than the endorsement node are synchronized, validation of the endorsement processing result is continued, if not synchronized, the operation is directly ended. The pre-execution mechanism not only implements time-dependent smart contracts, but also improves efficiency of validation of the node other than the endorsement node on endorsement processing results.

It should be understood that the various forms of processes shown above can be used to reorder, add or delete steps. For example, the steps described in the disclosure could be performed in parallel, sequentially, or in a different order, as long as the desired result of the technical solution disclosed in the disclosure is achieved, which is not limited herein.

The above specific embodiments do not constitute a limitation on the protection scope of the present disclosure. Those skilled in the art should understand that various modifications, combinations, sub-combinations and substitutions can be made according to design requirements and other factors. The invention is defined by the appended claims.

## Claims

1. A method of data processing based on smart contract, implemented by an endorsement node in a blockchain network, comprising:
determining a current endorsement time based on a generating time point of the previous block in an endorsement blockchain during calling a time-dependent smart contract (S110); and
preprocessing a current transaction processing request based on the current endorsement time to obtain an endorsement processing result, to enable a node other than the endorsement node in the blockchain network to process the current transaction processing request based on the endorsement processing result (S120);
wherein the determining the current endorsement time based on the generating time point of the previous block in the endorsement blockchain (S110) comprises:
determining a generating time point of the current block in the endorsement blockchain based on the generating time point of the previous block in the endorsement blockchain and a block generating time interval; and
determining the generating time point of the current block in the endorsement blockchain as the current endorsement time.

2. The method according to claim 1, further comprising:
triggering an operation of determining the current endorsement time when the smart contract implements a current time acquisition function.

3. The method according to claim 1 or 2, further comprising:
during calling the smart contract, determining a height of a previous block in the endorsement blockchain, to enable the node other than the endorsement node to validate the endorsement processing result based on the height of the previous block in the endorsement blockchain (S220).

4. A method of data processing based on smart contract, implemented by a node other than an endorsement node in a blockchain network, comprising:
receiving a current transaction processing request and an endorsement processing result, wherein the endorsement processing result is obtained by preprocessing the current transaction processing request through calling a time-dependent smart contract by the endorsement node (S310);
calling the smart contract, and determining a local current time based on a generating time point of the previous block in a local blockchain (S320);
processing the current transaction processing request based on the local current time to obtain a local processing result (S330); and
determining whether the endorsement processing result is consistent with the local processing result to obtain a validation result, and generating a final processing result based on the validation result (S340);
wherein the determining the local current time based on the generating time point of the previous block in the local blockchain (S320) comprises:
determining a generating time point of a current block in the local blockchain based on the generating time point of the previous block in the local blockchain and a block generating time interval; and
determining the generating time point of the current block in the local blockchain as the local current time.

5. The method according to claim 4, before calling the smart contract and determining the local current time based on the generating time point of the previous block in the local blockchain (S320), further comprising:
receiving a height of a previous block in an endorsement blockchain;
determining a height of a previous block in the local blockchain; and
stopping operations, when the height of the previous block in the endorsement blockchain is inconsistent with the height of the previous block in the local blockchain.

6. The method according to claim 4 or 5, wherein the generating the final processing result based on the validation result (S340) comprises:
generating a current block as the final processing result, when the node other than the endorsement node is a block generating node, and the endorsement processing result is consistent with the local processing result; and
determining the final processing result that the current block passes the validation, when the node other than the endorsement node is a block validation node, and the endorsement processing result is consistent with the local processing result.

7. An apparatus for data processing based on smart contract (400), configured in an endorsement node in a block-chain network, comprising:
an endorsement time determining module (410), configured to determine a current endorsement time based on a generating time point of the previous block in an endorsement blockchain during calling a time-dependent smart contract; and
a request preprocessing module (420), configured to preprocess a current transaction processing request based on the current endorsement time to obtain an endorsement processing result, to enable a node other than the endorsement node in the block-chain network to process the current transaction processing request based on the endorsement processing result;
wherein the endorsement time determining module (410) is configured to:
determine a generating time point of the current block in the endorsement blockchain based on the generating time point of the previous block in the endorsement blockchain and a block generating time interval; and
determine the generating time point of the current block in the endorsement blockchain as the current endorsement time.

8. An apparatus for data processing based on smart contract (500), configured in a node other than an endorsement node in a block-chain network, comprising:
a receiving module (510), configured to receive a current transaction processing request and an endorsement processing result, wherein the endorsement processing result is obtained by preprocessing the current transaction processing request through calling a time-dependent smart contract by the endorsement node;
a local time module (520), configured to call the smart contract and determine a local current time based on a generating time point of the previous block in a local blockchain;
a request processing module (530), configured to process the current transaction processing request based on the local current time to obtain a local processing result; and
a request validation module (540), configured to determine whether the endorsement processing result is consistent with the local processing result to obtain a validation result, and generate a final processing result based on the validation result;
wherein, the local time module (520) is configured to:
determine a generating time point of a current block in the local blockchain based on the generating time point of the previous block in the local blockchain and a block generating time interval; and
determine the generating time point of the current block in the local blockchain as the local current time.

9. An electronic device, comprising:
at least one processor (601); and
a memory (602) connected in communication with the at least one processor (601); wherein,
the memory (602) stores instructions executable by the at least one processor (601), when the instructions are executed by the at least one processor (601), the at least one processor (601) is caused to implement the method according to any one of claims 1-6.

10. A non-transitory computer-readable storage medium storing computer instructions, wherein when the computer instructions are executed, the computer is caused to implement the method according to any one of claims 1-6.

11. A computer program product comprising computer programs, wherein when the computer programs are executed, the computer programs are caused to implement the method according to any one of claims 1-6.

## Patentansprüche

1. Verfahren zur Datenverarbeitung basierend auf Smart Contracts, implementiert durch einen Bestätigungsknoten in einem Blockchain-Netzwerk, umfassend:
Bestimmen einer aktuellen Bestätigungszeit basierend auf einem Erzeugungszeitpunkt des vorherigen Blocks in einer Bestätigungs-Blockchain während des Aufrufens eines zeitabhängigen Smart Contracts (S110); und
Vorverarbeiten einer aktuellen Transaktions-Verarbeitungsanforderung basierend auf der aktuellen Bestätigungszeit, um ein Bestätigungs-Verarbeitungsergebnis zu erhalten, um einem anderen Knoten als dem Bestätigungsknoten in dem Blockchain-Netzwerk zu ermöglichen, die aktuelle Transaktions-Verarbeitungsanforderung basierend auf dem Bestätigungs-Verarbeitungsergebnis zu verarbeiten (S120);
wobei das Bestimmen der aktuellen Bestätigungszeit basierend auf dem Erzeugungszeitpunkt des vorherigen Blocks in der Bestätigungs-Blockchain (S110) umfasst:
Bestimmen eines Erzeugungszeitpunkts des aktuellen Blocks in der Bestätigungs-Blockchain basierend auf dem Erzeugungszeitpunkt des vorherigen Blocks in der Bestätigungs-Blockchain und einem Blockerzeugungszeitintervall; und
Bestimmen des Erzeugungszeitpunkts des aktuellen Blocks in der Bestätigungs-Blockchain als die aktuelle Bestätigungszeit.

2. Verfahren nach Anspruch 1, ferner umfassend:
Auslösen einer Operation zum Bestimmen der aktuellen Bestätigungszeit, wenn der Smart Contract eine aktuelle Zeiterfassungsfunktion implementiert.

3. Verfahren nach Anspruch 1 oder 2, ferner umfassend:
während des Aufrufens des Smart Contracts, Bestimmen einer Höhe eines vorherigen Blocks in der Bestätigungs-Blockchain, um es dem anderen Knoten als dem Bestätigungsknoten zu ermöglichen, das Bestätigungs-Verarbeitungsergebnis basierend auf der Höhe des vorherigen Blocks in der Bestätigungs-Blockchain zu validieren (S220).

4. Verfahren zur Datenverarbeitung basierend auf einem Smart Contract, das von einem anderen Knoten als einem Bestätigungsknoten in einem Blockchain-Netzwerk implementiert wird, umfassend:
Empfangen einer aktuellen Transaktions-Verarbeitungsanforderung und eines Bestätigungs-Verarbeitungsergebnisses, wobei das Bestätigungs-Verarbeitungsergebnis erhalten wird durch Vorverarbeiten der aktuellen Transaktions-Verarbeitungsanforderung durch Aufrufen eines zeitabhängigen Smart Contracts durch den Bestätigungsknoten (S310);
Aufrufen des Smart Contracts und Bestimmen einer lokalen aktuellen Zeit basierend auf einem Erzeugungszeitpunkt des vorherigen Blocks in einer lokalen Blockchain (S320);
Verarbeiten der aktuellen Transaktions-Verarbeitungsanforderung basierend auf der lokalen aktuellen Zeit, um ein lokales Verarbeitungsergebnis zu erhalten (S330); und
Bestimmen, ob das Bestätigungs-Verarbeitungsergebnis mit dem lokalen Verarbeitungsergebnis konsistent ist, um ein Validierungsergebnis zu erhalten, und Erzeugen eines finalen Verarbeitungsergebnisses basierend auf dem Validierungsergebnis (S340);
wobei das Bestimmen der lokalen aktuellen Zeit basierend auf dem Erzeugungszeitpunkt des vorherigen Blocks in der lokalen Blockchain (S320) umfasst:
Bestimmen eines Erzeugungszeitpunkts eines aktuellen Blocks in der lokalen Blockchain basierend auf dem Erzeugungszeitpunkt des vorherigen Blocks in der lokalen Blockchain und einem Blockerzeugungszeitintervall, und
Bestimmen des Erzeugungszeitpunkts des aktuellen Blocks in der lokalen Blockchain als die lokale aktuelle Zeit.

5. Verfahren nach Anspruch 4, vor dem Aufrufen des Smart Contracts und Bestimmen der lokalen aktuellen Zeit basierend auf dem Erzeugungszeitpunkt des vorherigen Blocks in der lokalen Blockchain (S320), ferner umfassend:
Empfangen einer Höhe eines vorherigen Blocks in einer Bestätigungs-Blockchain;
Bestimmen einer Höhe eines vorherigen Blocks in der lokalen Blockchain; und
Stoppen von Operationen, wenn die Höhe des vorherigen Blocks in der Bestätigungs-Blockchain nicht mit der Höhe des vorherigen Blocks in der lokalen Blockchain konsistent ist.

6. Verfahren nach Anspruch 4 oder 5, wobei das Erzeugen des finalen Verarbeitungsergebnisses basierend auf dem Validierungsergebnis (S340) umfasst:
Erzeugen eines aktuellen Blocks als finales Verarbeitungsergebnis, wenn der andere Knoten als der Bestätigungsknoten ein blockerzeugender Knoten ist und das Bestätigungs-Verarbeitungsergebnis mit dem lokalen Verarbeitungsergebnis konsistent ist; und
Bestimmen des finalen Verarbeitungsergebnisses, dass der aktuelle Block die Validierung besteht, wenn der andere Knoten als der Bestätigungsknoten ein Blockvalidierungsknoten ist, und das Bestätigungs-Verarbeitungsergebnis mit dem lokalen Verarbeitungsergebnis konsistent ist.

7. Vorrichtung zur Datenverarbeitung basierend auf einem Smart Contract (400), ausgebildet in einem Bestätigungsknoten in einem Blockchain-Netzwerk, umfassend:
ein Bestätigungszeit-Bestimmungsmodul (410), das ausgebildet ist zum Bestimmen einer aktuellen Bestätigungszeit basierend auf einem Erzeugungszeitpunkt des vorherigen Blocks in einer Bestätigungs-Blockchain während des Aufrufens eines zeitabhängigen Smart Contracts; und
ein Anforderungs-Vorverarbeitungsmodul (420), das ausgebildet ist zum Vorverarbeiten einer aktuellen Transaktions-Verarbeitungsanforderung basierend auf der aktuellen Bestätigungszeit, um ein Bestätigungs-Verarbeitungsergebnis zu erhalten, um es einem anderen Knoten als dem Bestätigungsknoten in dem Blockchain-Netzwerk zu ermöglichen, die aktuelle Transaktions-Verarbeitungsanforderung basierend auf dem Bestätigungs-Verarbeitungsergebnis zu verarbeiten;
wobei das Bestätigungszeit-Bestimmungsmodul (410) ausgebildet ist zum:
Bestimmen eines Erzeugungszeitpunkts des aktuellen Blocks in der Bestätigungs-Blockchain basierend auf dem Erzeugungszeitpunkt des vorherigen Blocks in der Bestätigungs-Blockchain und einem Blockerzeugungszeitintervall; und
Bestimmen des Erzeugungszeitpunkts des aktuellen Blocks in der Bestätigungs-Blockchain als die aktuellen Bestätigungszeit.

8. Vorrichtung zur Datenverarbeitung basierend auf einem Smart Contract (500), ausgebildet in einem anderen Knoten als einem Bestätigungsknoten in einem Blockchain-Netzwerk, umfassend:
ein Empfangsmodul (510), das ausgebildet ist zum Empfangen einer aktuellen Transaktions-Verarbeitungsanforderung und eines Bestätigungs-Verarbeitungsergebnisses, wobei das Bestätigungs-Verarbeitungsergebnis erhalten wird durch Vorverarbeiten der aktuellen Transaktions-Verarbeitungsanforderung durch Aufrufen eines zeitabhängigen Smart Contracts durch den Bestätigungsknoten;
ein Ortszeitmodul (520), das ausgebildet ist zum Aufrufen des Smart Contracts und Bestimmen einer aktuellen Ortszeit basierend auf einem Erzeugungszeitpunkt des vorherigen Blocks in einer lokalen Blockchain;
ein Anforderungsverarbeitungsmodul (530), das ausgebildet ist zum Verarbeiten der aktuellen Transaktions-Verarbeitungsanforderung basierend auf der lokalen aktuellen Zeit, um ein lokales Verarbeitungsergebnis zu erhalten; und
ein Anforderungsvalidierungsmodul (540), das ausgebildet ist zum Bestimmen, ob das Bestätigungs-Verarbeitungsergebnis mit dem lokalen Verarbeitungsergebnis konsistent ist, um ein Validierungsergebnis zu erhalten, und um ein endgültiges Verarbeitungsergebnis basierend auf dem Validierungsergebnis zu erzeugen;
wobei das Ortszeitmodul (520) ausgebildet ist zum:
Bestimmen eines Erzeugungszeitpunkts eines aktuellen Blocks in der lokalen Blockchain basierend auf dem Erzeugungszeitpunkt des vorherigen Blocks in der lokalen Blockchain und einem Blockerzeugungszeitintervall; und
Bestimmen des Erzeugungszeitpunkts des aktuellen Blocks in der lokalen Blockchain als die lokale aktuelle Zeit.

9. Elektronische Vorrichtung, umfassend:
mindestens einen Prozessor (601); und
einen Speicher (602), der kommunikativ mit dem mindestens einen Prozessor (601) verbunden ist; wobei
der Speicher (602) Anweisungen speichert, die von dem mindestens einen Prozessor (601) ausführbar sind, und wenn die Anweisungen von dem mindestens einen Prozessor (601) ausgeführt werden, der mindestens eine Prozessor (601) veranlasst wird, das Verfahren gemäß einem der Ansprüche 1-6 zu implementieren.

10. Nichtflüchtiges computerlesbares Speichermedium, das Computeranweisungen speichert, wobei, wenn die Computeranweisungen ausgeführt werden, der Computer veranlasst wird, das Verfahren nach einem der Ansprüche 1-6 zu implementieren.

11. Computerprogrammprodukt, das Computerprogramme umfasst, wobei, wenn die Computerprogramme ausgeführt werden, die Computerprogramme bewirken, dass das Verfahren nach einem der Ansprüche 1-6 zu implementiert wird.

## Revendications

1. Procédé de traitement de données basé sur un contrat intelligent, mis en œuvre par un noeud d'approbation dans un réseau de chaînes de blocs, comprenant-:
la détermination d'un temps d'approbation actuel sur la base d'un point temporel de génération du bloc précédent dans une chaîne de blocs d'approbation pendant l'appel d'un contrat intelligent dépendant du temps (S110)-; et
le pré-traitement d'une demande de traitement de transaction actuelle sur la base du temps d'approbation actuel pour l'obtention d'un résultat de traitement d'approbation, pour permettre à un noeud autre que le noeud d'approbation dans le réseau de chaînes de blocs de traiter la demande de traitement de transaction actuelle sur la base du résultat de traitement d'approbation (S120)-;
dans lequel la détermination du temps d'approbation actuel sur la base du point temporel de génération du bloc précédent dans la chaîne de blocs d'approbation (S110) comprend-:
la détermination d'un point temporel de génération du bloc actuel dans la chaîne de blocs d'approbation sur la base du point temporel de génération du bloc précédent dans la chaîne de blocs d'approbation et d'un intervalle de temps de génération de bloc-; et
la détermination du point temporel de génération du bloc actuel dans la chaîne de blocs d'approbation comme étant le temps d'approbation actuel.

2. Procédé selon la revendication 1, comprenant en outre-:
le déclenchement d'une opération de détermination du temps d'approbation actuel lorsque le contrat intelligent met en œuvre une fonction d'acquisition de temps actuel.

3. Procédé selon la revendication 1 ou 2, comprenant en outre-:
pendant l'appel du contrat intelligent, la détermination d'une hauteur d'un bloc précédent dans la chaîne de blocs d'approbation, pour permettre au noeud autre que le noeud d'approbation de valider le résultat de traitement d'approbation sur la base de la hauteur du bloc précédent dans la chaîne de blocs d'approbation (S220).

4. Procédé de traitement de données basé sur un contrat intelligent, mis en œuvre par un noeud autre qu'un noeud d'approbation dans un réseau de chaînes de blocs, comprenant-:
la réception d'une demande de traitement de transaction actuelle et d'un résultat de traitement d'approbation, le résultat de traitement d'approbation étant obtenu par pré-traitement de la demande de traitement de transaction actuelle, où le noeud d'approbation appelle un contrat intelligent dépendant du temps (S310)-;
l'appel du contrat intelligent, et la détermination d'un temps actuel local sur la base d'un point temporel de génération du bloc précédent dans une chaîne de blocs locale (S320)-;
le traitement de la demande de traitement de transaction actuelle sur la base du temps actuel local pour l'obtention d'un résultat de traitement local (S330)-; et
la détermination si le résultat de traitement d'approbation coïncide avec le résultat de traitement local pour l'obtention d'un résultat de validation, et
la génération d'un résultat de traitement final sur la base du résultat de validation (S340)-;
dans lequel la détermination du temps actuel local sur la base du point temporel de génération du bloc précédent dans la chaîne de blocs locale (S320) comprend-:
la détermination d'un point temporel de génération d'un bloc actuel dans la chaîne de blocs d'approbation sur la base du point temporel de génération du bloc précédent dans la chaîne de blocs locale et d'un intervalle de temps de génération de bloc-; et
la détermination du point temporel de génération du bloc actuel dans la chaîne de blocs locale comme étant le temps actuel local.

5. Procédé selon la revendication 4, comprenant en outre, avant l'appel du contrat intelligent et la détermination du temps actuel local sur la base du point temporel de génération du bloc précédent dans la chaîne de blocs locale (S320)-:
la réception d'une hauteur d'un bloc précédent dans une chaîne de blocs d'approbation-;
la détermination d'une hauteur d'un bloc précédent dans la chaîne de blocs locale-; et
l'arrêt des opérations, lorsque la hauteur du bloc précédent dans la chaîne de blocs d'approbation ne coïncide pas avec la hauteur du bloc précédent dans la chaîne de blocs locale.

6. Procédé selon la revendication 4 ou 5, dans lequel la génération du résultat de traitement final sur la base du résultat de validation (S340) comprend-:
la génération d'un bloc actuel comme résultat de traitement final, lorsque le noeud autre que le noeud d'approbation est un noeud de génération de bloc, et que le résultat de traitement d'approbation coïncide avec le résultat de traitement local-; et
la détermination du résultat de traitement final indiquant que le bloc actuel est validé, lorsque le noeud autre que le noeud d'approbation est un noeud de validation de bloc, et que le résultat de traitement d'approbation coïncide avec le résultat de traitement local.

7. Appareil de traitement de données sur la base d'un contrat intelligent (400), configuré dans un noeud d'approbation dans un réseau de chaînes de blocs, comprenant-:
un module de détermination de temps d'approbation (410), configuré pour déterminer un temps d'approbation actuel sur la base d'un point temporel de génération du bloc précédent dans une chaîne de blocs d'approbation pendant l'appel d'un contrat intelligent dépendant du temps-; et
un module de pré-traitement de demande (420), configuré pour prétraiter une demande de traitement de transaction actuelle sur la base du temps d'approbation actuel pour l'obtention d'un résultat de traitement d'approbation, pour permettre à un noeud autre que le nœud d'approbation dans le réseau de chaînes de blocs de traiter la demande de traitement de transaction actuelle sur la base du résultat de traitement d'approbation-;
dans lequel le module de détermination de temps d'approbation (410) est configuré pour-:
déterminer un point temporel de génération du bloc actuel dans la chaîne de blocs d'approbation sur la base du point temporel de génération du bloc précédent dans la chaîne de blocs d'approbation et d'un intervalle de temps de génération de bloc-; et
la détermination du point temporel de génération du bloc actuel dans la chaîne de blocs d'approbation comme étant le temps d'approbation actuel.

8. Appareil de traitement de données sur la base d'un contrat intelligent (500), configuré dans un noeud autre qu'un noeud d'approbation dans un réseau de chaînes de blocs, comprenant-:
un module de réception (510), configuré pour recevoir une demande de traitement de transaction actuelle et un résultat de traitement d'approbation, dans lequel le résultat de traitement d'approbation est obtenu par pré-traitement de la demande de traitement de transaction actuelle, où le noeud d'approbation appelle un contrat intelligent dépendant du temps-;
un module de temps local (520), configuré pour appeler le contrat intelligent et pour déterminer un temps actuel local sur la base d'un point temporel de génération du bloc précédent dans une chaîne de blocs locale-;
un module de traitement de demande (530), configuré pour traiter la demande de traitement de transaction actuelle sur la base du temps actuel local pour l'obtention d'un résultat de traitement local ; et
un module de validation de demande (540), configuré pour déterminer si le résultat de traitement d'approbation coïncide avec le résultat de traitement local pour l'obtention d'un résultat de validation, et pour générer un résultat de traitement final sur la base du résultat de validation-;
dans lequel le module de temps local (520) est configuré pour-:
déterminer un point temporel de génération d'un bloc actuel dans la chaîne de blocs locale sur la base du point temporel de génération du bloc précédent dans la chaîne de blocs locale et d'un intervalle de temps de génération de bloc-; et
déterminer le point temporel de génération du bloc actuel dans la chaîne de blocs locale comme temps actuel local.

9. Dispositif électronique, comprenant-:
au moins un processeur (601)-; et
une mémoire (602) connectée en communication avec l'au moins un processeur (601)-; dans lequel,
la mémoire (602) stocke des instructions exécutables par l'au moins un processeur (601), lorsque les instructions sont exécutées par l'au moins un processeur (601), l'au moins un processeur (601) est amené à mettre en œuvre le procédé selon l'une quelconque des revendications 1 à 6.

10. Support de stockage non transitoire lisible par ordinateur, stockant des instructions d'ordinateur, dans lequel, lorsque les instructions d'ordinateur sont exécutées, l'ordinateur est amené à mettre en œuvre le procédé selon l'une quelconque des revendications 1 à 6.

11. Produit de programme informatique comprenant des programmes informatiques, dans lequel, lorsque les programmes informatiques sont exécutés, les programmes informatiques sont amenés à mettre en œuvre le procédé selon l'une quelconque des revendications 1 à 6.
